(19) Europäisches Patentamt
European Patent Office
Office européen des brevets

(11) EP 3 502 903 A1

(12) EUROPEAN PATENT APPLICATION

(43) Date of publication:
26.06.2019 Bulletin 2019/26

(51) Int Cl.:
G06F 11/36 (2006.01)   H03M 7/30 (2006.01)
G06F 11/34 (2006.01)   H04L 9/00 (2006.01)

(21) Application number: 17209112.6

(22) Date of filing: 20.12.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD TN

(71) Applicant: ESHARD
33650 Martillac (FR)

(72) Inventors:
• WURCKER, Antoine
33600 Pessac (FR)

• BETHOUART, Guillaume
33130 Bègles (FR)
• FEIX, Benoît
13400 Aubagne (FR)
• GAGNEROT, Georges
13011 Marseille (FR)
• RIVIÈRE, Lionel
33000 Bordeaux (FR)

(74) Representative: de Roquemaurel, Bruno et al
Omnipat
24 place des Martyrs de la Résistance
13100 Aix en Provence (FR)

(54) **METHOD OF TESTING RESISTANCE OF A SOFTWARE PROGRAM TO A SIDE-CHANNEL ANALYSIS**

(57) The invention relates to a method for testing a software program (AP), comprising: receiving, by a computing device (EMR), a compressed trace (CTR) obtained by executing the software program by a target processor at least once from a first input data set (ID), by acquiring an execution trace during the execution of the software program, and by compressing the execution trace during or after the execution of the software program, the execution trace comprising data samples (SV) acquired from registers of the target processor at each of sampling cycles, the data samples obtained from one of the registers and during one execution of the software program forming at least one data stream, the data streams acquired during one execution of the software program forming the execution trace; storing the compressed trace in a memory (TRDB); and performing, by the computing device, a statistical processing (SAT) directly applied to data in the compressed trace, to determine hidden data manipulated by the software program.

Fig. 1

**Description**

TECHNICAL FIELD

The present invention relates to a method of testing a software program, in particular a program designed to handle secret data such as a secret key, or including an encryption operation. The objective of such a test is to determine the resistance of the program to an attack such as a side-channel attack aiming to discover the secret data handled by the program. Side channel attacks of a circuit or software program are based on acquisition of traces of signals that can be detected when the circuit or program performs operations, in particular a sensitive operation and/or an operation manipulating secret data.

The present invention also relates to acquisition of internal or external register content or data transmitted by busses when performing tests of a software program.

BACKGROUND

Software programs such as those used in DRM (Digital Right Management) technology may be subjected to reverse engineering using decompiler tools, in order to recover secret or sensitive data manipulated by a program. However, this technique may request several days or weeks, or even several years for a complex software program in current conditions. In addition, software programs may be protected in particular using encryption or obfuscation techniques, such as "Whitebox Cryptography" techniques. The objective of these techniques is to hide the secret or sensitive data manipulated by the program in such a way that it is very difficult to determine them by reverse engineering. The secret or sensitive data may be embedded into the program or transmitted from outside through a secure communication channel.

More recently new attack techniques inspired from hardware side-channel attacks were developed to recover secret or sensitive data manipulated by a program.

Therefore it may be desirable to test or evaluate the efficiency of the protection of a software program. Such a test may be performed by acquiring and recording traces of content of registers of a computing device when the latter is executing the software program, and by applying statistical analyses to the acquired traces. The trace acquisition may be performed using software tools simulating or emulating a target computing device executing the program and allowing measuring or collecting all internal states, variables, content of registers, and data transmitted by busses of the computing device during execution of the program.

Statistical analyses such as "Correlation Power Analysis" (CPA) (ref. [2]) and "Mutual Information Analysis" (MIA) (ref. [3]) can be used to perform statistical dependency tests (also called "distinguishers") between the traces and a data leakage model.

The patent application EP 3 220 304 (US2017/0244547) filed by the Applicant discloses other statistical analyses applied to traces recorded when a circuit or a computing device executing a software program performs a sensitive operation.

However, acquisition of such traces may need a huge amount of data to store. For example, Intel i386™ architecture has nine 32-bit registers including a program counter register. Intel x86™ 64-bit architectures comprise eighteen 64-bit registers. ARM™ 32-bit architecture has sixteen 32-bit registers. The content of all these registers may be sampled by acquiring the data stored at each of sampling cycle. Indeed, a single trace can be of several hundreds of megabytes or several gigabytes. To keep the data of one trace consistent, it is preferred to store them into a single file. However manipulating a file of several gigabytes is problematic, since it requires using a computer having a RAM (Random Access Memory) memory of more than the size of the file to process, and loading such a file into the RAM memory requires a relatively long time. Additionally, the analysis itself requires accessing all data collected for one test, which can be challenging.

Collecting one or several thousands of such traces also raises a data storage issue: recording thousands of traces of several gigabytes requires several terabytes. In addition, the analysis of thousands of traces raises other issues, notably to access particular points in a trace, and in terms of processing time. The storage of results provided by analysis of such traces may also raise a data storage issue.

To overcome these issues, known solutions require selecting which collected data to be stored, and/or to focus only on a part of the processor registers, or on a part of the computation when it is possible to know where to focus. However, these solutions intrinsically lead to a potential loss of useful information that cannot be taken into account by the analysis.

More generally, there exist data compression schemes for saving data storage space. Data compression schemes with data losses are the most efficient in term of compression ratio. However, the use of such compression schemes in the context of data trace acquisition for software or circuit security analysis involves an additional processing time to decompress the data, and a potential loss of useful information. Data compression schemes without data losses are less efficient in terms of compression ratio, and still involve additional processing time to decompress the data before performing a side channel analysis.

Most of side-channel analyses require time alignment of all the traces to analyze. In other words, all the measurements performed at a given time, for example, from the time the execution of a command is activated by the computing device, must correspond to a same operation performed by the software program. Besides known compression schemes generally break or disturb time alignment between traces. Therefore, the compressed traces must be completely decompressed before performing a side-channel analysis of the traces. Accordingly, compressing the acquired traces may reduce the data storage space to be used for storing the traces, but it strongly increases the time required to process the traces and the memory to be used when processing the traces.

In view of the drawbacks of current approaches set out above, it may be desirable to reduce the size of the data traces to be acquired and stored without increasing the time required to process these data.

It may also be desirable for such tests to be integrated into an industrial qualification and/or certification process, aiming to check the robustness or resistance of software programs to side-channel analyses, and their tightness in terms of information leakage.

SUMMARY

A method is described for analyzing security of a software program. The method may include: receiving, by a computing device, a compressed trace obtained by executing the software program by a target processor at least once from a first input data set, by acquiring an execution trace during the execution of the software program, and by compressing the execution trace during or after the execution of the software program , the execution trace comprising data samples acquired from at least one register of the target processor at each of sampling times, the data samples obtained from the register and during one execution of the software program forming at least one data stream, the data streams acquired during one execution of the software program forming the execution trace; storing the compressed trace in a memory; and performing, by the computing device, a statistical processing directly applied to data in the compressed trace, to determine hidden data manipulated by the software program.

According to an embodiment, the method further comprises receiving, by the computing device, a plurality of compressed traces acquired from a plurality of executions of the software program from respective different input data sets, the statistical processing being applied to the compressed traces.

According to an embodiment, the compressed trace comprises several compressed data streams obtained from a first data stream of wide data samples divided into several words, each of the several data streams comprising one word extracted from each wide data sample of at least a part of the first data stream.

According to an embodiment, the compressed trace is obtained by compressing a sequence of consecutive identical data samples in a data stream of one execution trace by a value of the identical data samples of the sequence followed by: a number of occurrences of the identical data samples in the sequence, and/or an index of a first data sample of the sequence in the data stream or in the execution trace, or indexes of the first data sample and of a last data sample, of the sequence in the data stream.

According to an embodiment, the compressed trace is obtained by identifying sequences of at least one consecutive data sample having a same sample value in a data stream of one execution trace, and for each identified sequence, by associating in the compressed trace, the sample value of the data samples of the sequence with position data defining positions and lengths of the distinct data samples in the execution trace or the data stream.

According to an embodiment, the compressed trace is obtained by compressing several data streams of one execution trace, the compression of the several data streams being performed by generating for each of sampling cycles a word specifying for each of the several data streams whether the data sample acquired at the sampling cycle is different or not from the data sample acquired at a previous consecutive sampling cycle, and a word comprising each of the sampled data acquired at the sampling cycle for each data stream, that is different from the data acquired at the previous consecutive cycle for the data stream.

According to an embodiment, the statistical processing comprises generating histograms storing numbers of occurrences of sample values, the number of occurrences of each sample value recorded in one of the histograms being computed directly from the compressed traces, by adding numbers of occurrences of sequences of consecutive identical data samples read in the compressed traces and having a same sample value, or by counting numbers of sequences of consecutive identical data in the compressed traces.

According to an embodiment, the statistical processing comprises generating an histogram accumulation table storing numbers of occurrences of sample values, by reading numbers of occurrences of a sample value in a first compressed trace, and by accumulating the read numbers of occurrences in the histogram accumulation table in a position selected by a first index corresponding to the sample value, a second index corresponding to a possible value of a part of a secret data to be determined by the statistical processing, and a third index corresponding to a result of an operation performed by the software program and applied to the secret data part and to an input data applied to the software program to obtain an execution trace corresponding to the first compressed trace.

According to an embodiment, the statistical processing comprises generating histograms storing numbers of occurrences of values by computing occurrence numbers of data read in the compressed traces, regardless an encoding format of the data stored in the compressed traces, or by considering the data stored in the compressed traces as acquired data samples.

According to an embodiment, the statistical processing is directly applied to the data stored in the compressed traces regardless an encoding format of the data stored in the compressed traces, the statistical processing comprising at least one of: a Differential Power Analysis (DPA), a Correlation Power Analysis (CPA), a Mutual Information Analysis (MIA).

According to an embodiment, the method further comprises extracting at least one respective part in each of the compressed traces, the statistical processing being directly applied to the extracted parts of the compressed traces.

Embodiments may also relate to a computer system comprising a processor configured to: receive a compressed trace obtained by executing a software program by a target processor at least once from a first input data set, by acquiring an execution trace during the execution of the software program, and by compressing the execution trace during or after the execution of the software program, the execution trace comprising data samples acquired from at least one register of the target processor at each of sampling times, the data samples obtained from the register and during one execution of the software program forming at least one data stream, the data streams acquired during one execution of the software program forming the execution trace; store the compressed trace in a memory; apply to the compressed trace a statistical processing in view of determining hidden data manipulated by the software program; and perform a statistical processing directly applied to data in the compressed trace, to determine hidden data manipulated by the software program.

According to an embodiment, the computer system is further configured to: execute, by the target processor or a simulation thereof, the software program at least once from a first input data set; during the execution of the software program, acquire the execution trace from the at least one register of the target processor; and during or after the execution of the software program, compress the execution trace to obtain the compressed trace.

According to an embodiment, the computer system is further configured to implement the method as previously defined.

Embodiments may also relate to a computer program product loadable into a computer memory and comprising code portions which, when carried out by one or more computers, configure the one or more computers to carry out the method as previously defined.

BRIEF DESCRIPTION OF THE DRAWINGS

Some examples of embodiments of the present invention, provided for illustration purposes only, may be better understood with reference to the following non-limiting and non-exhaustive descriptions and drawings. In the figures, like referenced signs may refer to like parts throughout the different figures unless otherwise specified.

Figure 1 is a block diagram of a software test system, according to an embodiment;
Figure 2 is a block diagram illustrating a data compression scheme, according to an embodiment;
Figure 3 is a flowchart illustrating compression steps according to the data compression scheme of Figure 2, according to an embodiment;
Figure 4 is a flowchart illustrating steps of reading a part of a trace compressed according to the data compression scheme of Figure 2, according to an embodiment;
Figure 5 is a block diagram illustrating a compression scheme, according to another embodiment;
Figure 6 is a block diagram illustrating a compression scheme, according to another embodiment;
Figure 7 illustrates, in graph form, an example of a table built from a compressed trace, to be used in a test of a software application, according to one embodiment;
Figure 8 schematically illustrates a table built from a set of compressed traces, to be used in a test of a software application, according to one embodiment;
Figure 9 is a flowchart illustrating steps of generating a histogram from a trace compressed according to the data compression scheme of Figure 6, according to an embodiment;
Figure 10 is a block diagram of a computer system that may be used to test a software application;
Figure 11 is a block diagram of a network computing system in which the test system can be implemented, according to an embodiment;

DETAILED DESCRIPTION

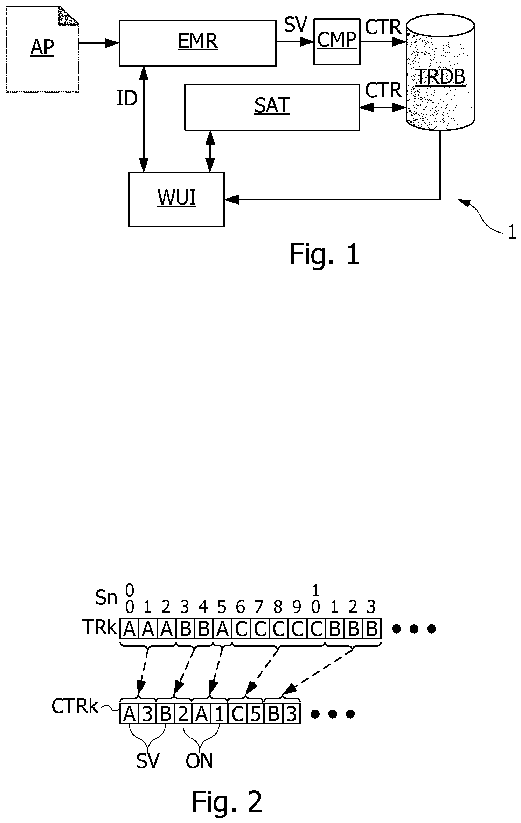

Figure 1 illustrates a computer system 1 configured to test the robustness of a software application AP against side-channel attacks, according to an embodiment. The system 1 comprises an emulation and/or simulation module EMR configured to emulate and/or simulate a target computing device executing the software application AP applied to user-selected input data ID, and to sample content of internal registers and/or busses of the targeted computing device at a sampling time. Accesses to a memory and data transmitted to a communication interface may also be sampled. Each value of targeted registers and buses of the computing device is recorded at each sampling cycle to form one or more data streams which are stored in the form of one trace for each execution of the software application AP.

The software application AP may be also executed directly by the target computing device, provided that the internal registers and other internal devices of the latter can be accessed and sampled by the system 1.

According to an embodiment, the module EMR provides sample values SV to a data compression module CMP configured to generate compressed traces CTR of sample values, which are stored in a trace storage TRDB. The system 1 further comprises a compressed trace analyzer SAT configured to perform one or more tests of the robustness of the software application AP against a side-channel analysis, using the stored compressed traces CTR.

The system 1 can further comprise a graphical user interface WUI enabling the user to input commands into the system 1 to conduct acquisition of traces and tests applied to the acquired traces, and to display analyses results.

A side channel analysis may be performed on a trace of N+1 data streams of M+1 sample values denoted from S00 to SNM. As used therein, a data stream designates a series of sample values collected at sampling times, in one register or other internal device of the targeted computing device, and a trace designates the set of all data streams acquired during one execution of the software application AP. The sampling times may be cyclic or not. Each trace can be arranged by concatenating the data streams acquired for the trace according to one of the two following organizations:

S00, S01, ..., S0M, S10, S11, ..., S1M, S20, ..., SN0, ..., SNM, or
S00, S10, ..., SN0, S01, S11, ..., SN1, S02, ..., S0M, ..., SNM,

The data samples of each trace may be also arranged according to a matrix organization, for example, in columns of data samples and row of data streams.

When sampling registers or other internal devices, it may be observed that the sampled values in a sample data stream are often constant during long periods. This phenomenon may be exploited to define a data compression scheme that may be implemented by the compression module CMP. Figure 2 illustrates such a data compression scheme, according to an embodiment. Figure 2 illustrates data samples of a trace TRk and a corresponding compressed trace CTRk. The compressed trace CTRk encodes each sequence of consecutive occurrences of a same sample value by a data pair having the form $<SVi><ONi>$, where SVi is a sample value met in the trace TRk, and ONi is the number of consecutive occurrences of the sample value SVi in the trace TRk.

In the example of Figure 2, the trace TRk comprises three first data samples (from 0 to 2) equal to "A", which are compressed by the data pair "A3". The two next data samples (from 3 to 4) are equal to "B" and are compressed by the data pair "B2". The next data sample (5) is equal to "A" and is compressed by the data pair "A1". The five next data samples (from 6 to 10) are equal to "C" and are compressed by the data pair "C5". The next three data samples (from 11 to 13) are equal to "B" and are compressed by the data pair "B3". It appears that the compression ratio of this compression scheme depends on the encoding size of the sample values SVi, the size used to encode the occurrence numbers ONi and the ratio of the number of sample value changes in the trace with respect to the number of data samples in the trace. Each data stream of the compressed trace CTRk may be stored in a same file. To locate each data stream in the file, it may be associated with a start offset that may be stored for example in a header of the file or in another file.

The encoding size of the occurrence numbers ONi may be fixed to the size of one byte, for example. If the trace TRk comprises a sequence of more than 255 consecutive occurrences of a same sample value SVi, two or more pairs (SVi,ONi) can be used to encode this sequence.

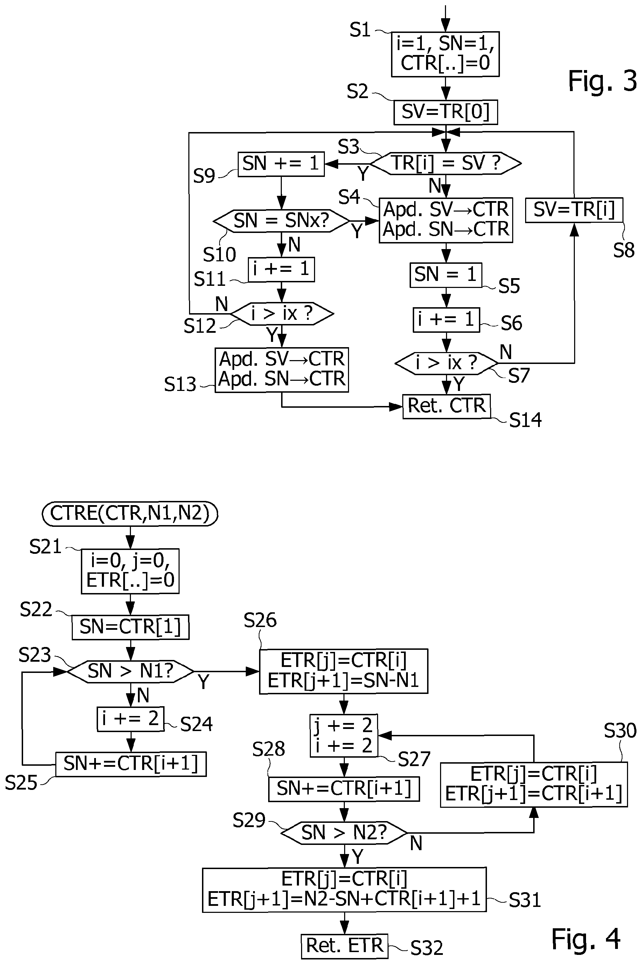

Figure 3 illustrates steps S1 to S14 of a compression procedure to compress traces according to the compression scheme of Figure 2. In step S1, an index i is set to 1, a variable SN for counting a number of consecutive occurrences of a data in an input trace TR, is initialized to 1, and a file CTR receiving the compressed trace is initialized to an empty file. In step S2, a variable SV receives the value of first data sample in the input trace TR. In step S3, the value of the data sample in the trace at the index i is compared with the variable SV. If the data sample at index i in the trace TR is equal to the variable SV, steps S9 and S10 are executed, otherwise, steps S4 to S7 are executed. In step S4, the sample value of the variable SV and the occurrence number SN are written into the file CTR at the end thereof. In step S5, the variable SN is initialized to 1. In step S6, index i is incremented by one. In step S7, index i is compared with the maximum number ix of data samples in the trace TR. If index i is greater than the maximum number ix, step S14 is performed, otherwise, steps S8 and then S3 are performed. In step S8, the variable SV receives the data sample value at index i in the trace TR. In step S9, the occurrence number SN is incremented by one. In step S10, the occurrence number SN is compared with a maximum value SNx, given the chosen size for encoding the occurrence numbers ONi in the compressed trace CTR. If the occurrence number SN is equal to its maximum value SNx, steps S4 to S7 are performed, otherwise steps S10 to S12 are performed. In step S11, index i is incremented by one. In step S12, index i is compared with its maximum value ix. If index i is greater than the maximum value ix, step S13 is performed, otherwise, step S3 is performed again. In step S13, the data sample value SV and the occurrence number SN are written into the file CTR at the end thereof. In step S14, all the data samples in the trace TR are compressed into the file containing the compressed trace CTR which is provided as an output of the compression procedure.

The statistical analysis performed by the module SAT may be applied to the whole compressed trace CTR, or one or several parts thereof. Figure 4 illustrates steps S21 to S32 of a procedure CTRE of extracting a part of the compressed trace CTR obtained using the data compression scheme of Figure 2. The part to be read extends between data sample indexes N1 and N2 in the trace TRk, this part being supposed to be included in the trace. In step S21, indexes i and j are set to 0, and a table ETR receiving the extracted compressed part is initialized to 0. In step S22, a variable SN receives the first number of occurrences ON read in the input compressed trace CTR. In step S23, the variable SN is compared with the index N1. If the variable SN is greater than the index N1, steps S26 to S29 are performed, otherwise steps S24, S25, and S23 are performed. In step S24, the index i is incremented by 2. In step S25, the variable SN is incremented by the next number of occurrences ON in the input compressed trace CTR, read at position defined by the index value i+1. When step S26 is executed, the number N1 is lower or equal to the variable SN, which means that the first sample value SV to be read in the compressed trace CTR is reached. In step S26, the table ETR at index j receives the sample value CTR[i] read at index i in the compressed trace. The table ETR at index j+1 receives the number of occurrences ON corresponding to the number N1, this number of occurrences being computed as follows: ETR[j+1] = SN-N1.

In step S27, the indexes i and j are incremented by two. In step S28, the variable SN is incremented by the next number of occurrences ON in the input compressed trace CTR, read at position defined by the index value i+1. In step S29, the value of the variable SN is compared with the index N2. If the variable SN is greater than the index N2, steps S31 and S32 are performed, otherwise the steps S30 and S27 to S29 are performed. In step S30, the table ETR at index j receives the sample value CTR[i] read at index i in the compressed trace CTR. The table ETR at index j+1 receives the number of occurrences read in the compressed trace CTR at index i+1 (ETR[j] = CTR[i+1]). In step S31, the table ETR at index j receives the sample value CTR[i] read at index i. The table ETR at index j+1 receives the number of occurrences ON corresponding to the number N2, this number of occurrences being computed as follows: ETR[j+1] = N2-SN+CTR[i+1]+1. In step S32, the part to be extracted from the compressed trace CTR is in the table ERT which is provided as an output of the reading procedure CTRE.

According to an embodiment, an index recording the position of the first occurrence of each sequence of consecutive values SVi may be added to each pair (SVi,ONi) recorded in the compressed trace CTRk of Figure 2, such that each compressed trace CTRk comprises a sequence of data groups of the following form:

<SVi><ISi><ONi>

where ISi is the index of the first occurrence in a set of consecutive occurrences of the sample value SVi.

According to another embodiment, the number of occurrences ONi may be replaced by this index in each pair (SVi,ONi) of the compressed trace CTRk of Figure 2, such that each compressed trace CTRk comprises a sequence of pairs of the form <SVi><ISi>. The number of occurrences in the sequence i can be computed using the number occurrences ISi+1 of the sequence i+1, as follows: ONi = ISi+1 - ISi.

The data samples acquired from one register or another internal device may form one data stream of the trace TRk. Especially in case of wide registers, the acquired data samples may be divided into smaller words, thus forming several data streams for one register. For example, a data sample read in a 32-bit register may be divided into four data samples of one byte, and the data samples acquired from such a register may be divided into four data streams, each data stream comprising a respective byte of all these data samples.

When the compressed trace comprises indexes ISi of data samples in the acquired trace TRk, the data in the compressed trace may be arranged irrespective of the data streams, because original order can be retrieved by sorting the groups (SVi,ISi,..) by ascending values of indexes ISi.

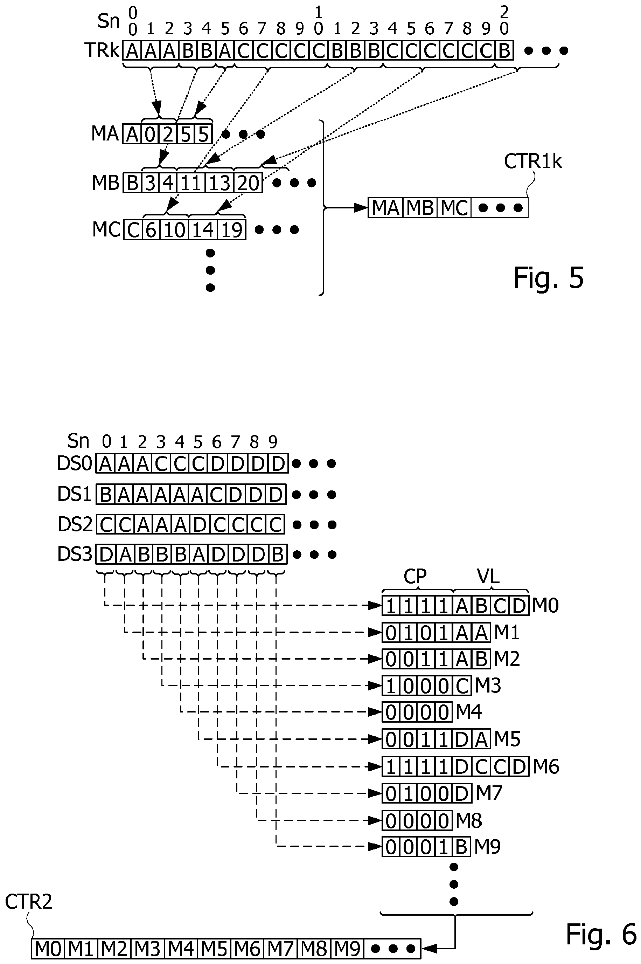

Figure 5 illustrates another compression scheme exploiting the presence in the traces of consecutive occurrences of a same data sample. Figure 5 illustrates 21 data samples of the trace TRk and a corresponding compressed trace CTR1k. The compression trace has the form of a dictionary of all different sample values in the trace TRk. The compressed trace CTR1k comprises one record for each different sample value SVi in the trace TRk. Each record comprising the sample value SVi and indexes of sequences of consecutive occurrences of the sample value in the acquired trace TRk, as follows:

<SVi><ISi1><IEi1><ISi2><IEi2>...

where SVi is a sample value in the trace TRk, and ISij and IEij are indexes in the trace of the beginning and end of a sequence of j consecutive occurrences of the sample value SVi, found in the trace. The sample values SVi with their associated indexes are appended in the compressed trace CTR1k. The positions in the compressed trace CRTlk of the sample values SVi can be stored for example in a file header of the file containing the compressed trace CTR1k or in another file. According to another embodiment, the compressed trace CTR1k is stored in the form of a two-dimension table indexed by the sample value number i and the sequence number j.

The sample values SVi associated with indexes ISij, IEij of their sequences j of consecutive occurrences may be recorded either separately for each data stream of one trace, or for all the data streams of the trace by concatenating the data streams of the trace into one data stream.

In the example of Figure 5, the occurrences of a data sample value "A" are recorded in the form of a word MA of variable length, including the sample value "A", followed by the numbers "0" and "2", and twice the number "5". The word MA specifies that the sample value "A" appears in the trace TRk from position 0 to position 2, and at position "5". The occurrences of a data sample "B" are recorded in the form of a word MB of variable length, including the sample value "B", followed by the numbers "3", "4", "11", "13" and "20". The word MB specifies that the sample value "B" appears in the trace TRk from position 3 to position 4, from position 11 to position 13 and from position 20. The occurrences of a data sample "C" are recorded in the form of a word MC of variable length, including the sample value "C", followed by the numbers "6", "10", "14" and "19". The word MC specifies that the sample value "C" appears in the trace TRk from position 6 to position 10, and from position 14 to position 19.

The compression scheme of Figure 5 is more effective when the number of different sample values in a trace is smaller. Therefore, the data samples acquired from a wide register may be advantageously divided into smaller words, the acquisition of data samples from such a register producing several data streams of data samples having the size of these words. According to an embodiment, the acquired data streams are byte streams, whereas the sampled registers have the size of more than one byte, for example 2, 4 or 8 bytes.

The indexes IEij in the trace TRk of the ends of the sequences of consecutive occurrences of the sample values SVi may be replaced in the compressed trace CTR1k with the lengths or numbers of occurrences ONij of the sequences of consecutive occurrences, as follows:

<SVi><ISi0><ONi0><ISi1><ONi1>...

A total number of occurrences can be computed for each sample value SVi by adding the occurrence numbers ONij (j = 0, 1, 2, ...) of the sample value SVi.

In the compression schemes of Figures 2 and 5, when each sequence of consecutive occurrences of a same sample value SVi is encoded in the compressed traces CTR, CTR1 with an index ISi, ISij of the first data sample of the sequence followed by a number of occurrences ONi, ONij in the sequence, the indexes ISi, ISij may refer to a position in an acquired trace TRk organized as follows:

S00, S10, ..., SN0, S01, S11, ..., SN1, S02, ..., S0M, ..., SNM,

where N+1 is the number of acquired data streams and M is the number of acquired data samples in each data stream. In this way, the data samples acquired in the first data stream at the first and second sampling cycles are associated in the acquired trace with indexes 0 and N+1, respectively.

Figure 6 illustrates another compression scheme that is simultaneously applied to a group of n+1 data streams DS0, DS1, ..., DSn. According to this compression scheme, all the data samples obtained at a given sampling cycle are compressed by a word Mj comprising a binary word CP comprising one bit per data stream in the considered data stream group. Each bit of the binary word CP is set to 0 if the current sample value in the corresponding data stream is the same as the preceding sample value in this data stream, and set to 1 if the current sample value is different from the preceding sample value in the corresponding data stream. The word Mj comprises a sample value for each data stream of the group, in which the current sample value is different from the preceding one (corresponding to a bit set to 1 in the word CP. The compressed trace CTR2 comprises one word Mj for each sampling cycle. Each word Mj has the following form:

<CP><VL>

where CP = b0-b1-...-bn, b0, b1, ..., bn are bits, VL=<SV0><SV1>... <SVn>, and SV0, SV1, ... SVn are optional sample values which are present or not depending on the value of the corresponding bit b0-bn. All the words Mj may be concatenated into the compressed trace CTR2. When the compressed trace CTR2 includes N+1 data stream and S+1 sample values per data stream, the size of the compressed trace CTR2 is comprised between (S+1)(N+1) bits plus (N+1) sample values (when the data streams DS0, ..., DSn are constant) and (S+1)(N+1) bits plus (S+1)(N+1) sample values (when each sample value is different from the previous one in each data stream). According to another embodiment, the words CP are stored separately from the associated values VL.

In the example of Figure 6, four data streams DS0-DS3 are compressed simultaneously, into a succession of words M0, ..., M9 of variable lengths (for the ten sampling cycles shown in Figure 6). The word M0 includes a word CP set to "1111", and is followed by the values "A", "B", "C", "D" of the data streams DS0-DS3 at the sampling cycle 0. The word M1 includes a word CP set to "0101" indicating that only the values of the data streams DS1 and DS3 have changed in the current sampling cycle 1 with respect to the previous sampling cycle 0. The word CP is followed by the new sample values "A" and "A" of the varying data streams DS1 and DS3 at the sampling cycle 1. The word M2 includes a word CP set to "0011" indicating that only the values of the data streams DS2 and DS3 have changed in the current sampling cycle 2 with respect to the previous sampling cycle 1. The word CP is followed by the new sample values "A" and "B" of the varying data streams DS2 and DS3. The word M3 includes a word CP set to "1000" indicating that only the value of the data stream DS0 has changed in the current sampling cycle 3 with respect to the previous sampling cycle 2. The word CP is followed by the new sample value "C" of the varying data stream DS0. The word M4 includes a word CP set to "0000" indicating that none of the values of the data streams DS0-DS3 have changed in the current sampling cycle 4 with respect to the previous sampling cycle 3. In this case, the word CP is not followed by any sample value. The word M5 includes a word CP set to "0011" indicating that only the values of the data streams DS2 and DS3 have changed in the current sampling cycle 5 with respect to the previous sampling cycle 4. The word CP is followed by the new sample values "D" and "A" of the varying data streams DS2 and DS3. The word M6 includes a word CP set to "1111" indicating that all the values of the data streams DS0 to DS3 have changed in the current sampling cycle 6 with respect to the previous sampling cycle 5. The word CP is followed by the new sample values "D", "C", "C" and "D" of the varying data streams DS0 to DS3. The word M7 includes a word CP set to "0100" indicating that only the value of the data streams DS1 has changed in the current sampling cycle 7 with respect to the previous sampling cycle 6. The word CP is followed by the new sample value "D" of the varying data stream DS1. The word M8 includes a word CP set to "0000" indicating that none of the values of the data streams DS0-DS3 have changed in the current sampling cycle 8 with respect to the previous sampling cycle 7. The word M8 does not include a sample value. The word M9 includes a word CP set to "0001" indicating that only the value of the data stream DS3 has changed in the current sampling cycle 9 with respect to the previous sampling cycle 8. The word CP is followed by the new sample value "B" of the varying data stream DS3.

The words Mj including a word CP having all its bits set to 0 (e.g. M4) may be not inserted into or removed from the compressed trace CTR2 to increase the compression ratio. This may be also performed with the compression schemes of Figures 2 and 5, when two successive sampling cycles provide the same data samples for all the acquired data streams of a trace, the data samples acquired during one of the two consecutive sampling cycles being removed from the acquired trace TRk.

Compression and extraction procedures adapted to compression schemes of Figures 5 and 6 can be easily designed. It may be observed that the compression schemes of Figures 2, 5 and 6 are lossless.

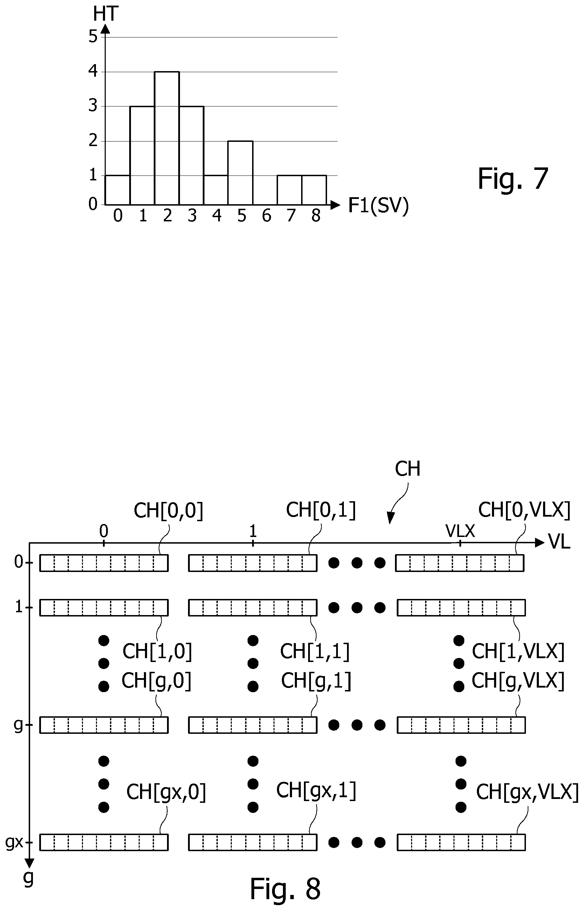

Figures 7 and 8 illustrate a test method disclosed in the patent application EP 3 220 304 (US2017/0244547). This test method analyzes traces linked to the activity of a circuit or software application and obtained for different input data applied to the circuit or software application. The software application is supposed to apply an operation to an input data and to a secret data to be discovered. The analysis may be applied to all the sample values in each trace or only one or more parts of each trace corresponding to the time when the targeted operation(s) is (are) supposed to be performed. The analysis first computes one histogram of numbers of occurrences of sample values for each trace, from the considered values in the trace. Figure 7 illustrates an example of such a histogram in the form of a graph occurrence numbers (in the y axis) of sample values (in the x axis). The sample values recorded in the histogram are previously transformed by a surjective function F1. In the example of Figure 7, the surjective function returns the Hamming weight when the sample values SV are 8-bit encoded values.

Then the test method computes a table in which the histograms are accumulated according to the following equation:

$$CH[g, VL, l] = \sum_k HT_k[l] \qquad (1)$$

where index k designates a trace TRk, index 1 designates a value in the histograms HT, and g and VL are indexes such that:

$$VL = F2(OPR(M[k],g)) \qquad (2)$$

F2 being a surjective function, OPR being the targeted operation, M[i] being the input data used to obtain the trace TRk, and g a possible value of a part of the secret data to be determined. Figure 8 represents an example of a table CH in which each location CH[g,VL] designated by the indexes g and VL contains a table obtained by accumulating several tables HT according to the value VL computed by equation (2). The part of the secret data searched for may, for example, be defined on 8 or 16 bits. In the case of 8 bits, the index g is successively allocated to all the values between 0 and 255 (or 1 and 256=$2^8$). The part of the secret data searched for may also be defined on wider words, such as 16, 32 or 64 bits.

The functions F1 and F2 can be chosen so as to correspond to the leakage pattern of the software application to be tested. Therefore, the functions F1 and F2 may be the same or different from each other, and may be chosen to increase the probability of discovering a secret data manipulated by the circuit. For example, the functions F1 and F2 may be at least one of the following functions:

- the identity function (F(x) = x),
- a function (e.g. in the form F(x) = a·x + b), with a resultant value that could be reduced to a value corresponding to a Hamming weight, for example between values 0 and 8 when x is encoded on 8 bits,
- a function that computes a Hamming weight of a value provided at input of the function, for example the number of bits at 1 of the binary coded value, or
- a function that computes a Hamming distance with another value, for example the difference between the numbers of bits at 1 of these two values.

The operation OPR applied to the secret data SD and to the input data M[i] may comprise at least one or a combination of the following operations or a partial operation thereof:

- a symmetrical or asymmetrical ciphering or deciphering operation, the secret data SD being the encryption or decryption key,
- a signature operation using the secret data SD,
- a modular or non-modular multiplication by the secret data (M[i] x SD),
- an XOR logic operation (Exclusive OR) with the secret data (M[i] XOR SD),
- a modular exponentiation operation, the secret data SD being used as exponent (M[i]$^{SD}$ mod n, n being known),
- a modular reduction operation, the secret data SD being used as modulus (M[i] mod SD),
- a substitution operation by a value selected in a substitution table using the input data (SBOX[M[i]], SBOX being the substitution table), or
- an operation combining an XOR logic operation applied to the secret data and the substitution operation replacing the result of the logic operation with a value selected in a substitution table using the result of the XOR operation (SBOX[M[i] XOR SD]).

More generally, the operation OPR must enable a part of the final value of the operation to be computed based solely on a part of the secret data and an input data.

Then the test method performs a statistical analysis of the table CH in view to reveal peak values related to particular values of the possible values g of the searched secret data part. An example of such a statistical analysis computes a table TT indexed by the possible values g of the searched secret data part. The table TT is computed by the following equation:

$$TT[g] = \prod_{VL=0}^{VLx} ITT[g, VL] \qquad (3)$$

where:

$$ITT[g, VL] = \sum_{I=0}^{Ix} \left[ \frac{CH[g, VL, I]}{CPT[g, VL]} - \frac{MHT[I]}{ix} \right]^2 \qquad (4)$$

with

$$CPT[g, VL] = \sum_{i=0}^{ix} (F2(OPR(M[i], g)) == VL) \quad , \text{ and} \qquad (5)$$

$$MHT[I] = \sum_{g=0}^{gx} \left[ \sum_{VL=0}^{VLx} CH[g, VL, I] \right], \qquad (6)$$

the operator "==" representing the equality test (equal to 1 when the equality is true, and to 0 when the equality is false), gx being the maximum possible value of the value g, VLx being the maximum value of the value VL, and Ix being the maximum value of the index 1.

If the table TT contains a single peak value for one value of index g, then this value of index g is supposed to be equal to the searched part of the secret data.

Another example of such a statistical analysis computes a table TT1 indexed by the possible values g of the searched secret data part. The table TT1 is computed by the following equation:

$$TT1[g] = - \sum_{VL=0}^{VLx} \left[ \frac{CPT[g, VL]}{ix} \cdot \sum_{I=0}^{Ix} \frac{CH[g, VL, I]}{SXY} \cdot \log\left( \frac{CH[g, VL, I]}{SXY} \right) \right] \qquad (7)$$

$$SXY = \sum_{I=0}^{Ix} CH[g, VL, I]$$

where is computed for each of the values of the indices

If the table TT or TT1 contains a peak value for one value of index g greater than the other values in the table, then this value of index g is supposed to be equal to the searched part of the secret data.

The histograms HT may be advantageously generated directly from the compressed traces CTRk, i.e. without decompressing the traces. In the compression scheme of Figure 2, the number of occurrences recorded in an histogram HT for a sample value SV (or a transformed sample value though function F1) can be computed by adding the occurrence numbers ONi related to a same sample value SVi (or related to sample values SVi having a same transformed value though function F1) in a considered part of each compressed trace CTRk. According to another embodiment, the number of occurrences recorded in a histogram HT for a sample value SVi (or a transformed sample value though function F1) can be advantageously computed simply by computing the number of sequences recorded for a same sample value SVi (or related to samples values having a same transformed value though function F1) in a considered part of each trace TRk. For example, in the part of the compressed trace CTRk of Figure 2, the number of sequences of the sample value "A" or the sample value "B" is two, and the number of sequences of the sample value "C" is one.

In the compression scheme of Figure 5, the number of occurrences recorded in an histogram HT for a sample value SV (or transformed sample value though function F1) can be computed by adding the occurrence numbers (IEij-ISij+1) or ONij related to a same sample value SVi (or related to samples values having a same transformed value through function F1) in a considered part of each trace CTRk. According to another embodiment, the number of occurrences recorded in a histogram HT for a sample value SVi (or transformed sample value though function F1) can be computed simply by computing the number of pairs (ISij,IEij) or (ISij,ONij) associated with the sample value SVi (or related to samples values having a same transformed value through the function F1) in a considered part of each trace TRk. For example, in the part of the compressed trace CTR1k of Figure 5, the sample value "A" is associated with two pairs (0,2), (5,5) in the form (ISij,IEij). Therefore the value recorded in the histogram for the sample value "A" is 3+1 when considering the occurrence number of the sample value "A", or 2 when considering only the number of sequences of consecutive occurrences of the sample value "A".

In the compression scheme of Figure 6, the number of occurrences recorded in a histogram HT for a sample value SV (or transformed sample value though function F1) can be computed from the words CP and VL in the words Mj. This operation can be performed by counting each occurrence of each possible sample value SV to be recorded in the histogram HT. A single data stream may be considered by counting an occurrence of the considered sample value only if according to the corresponding word CP the occurrence belongs to the considered data stream.

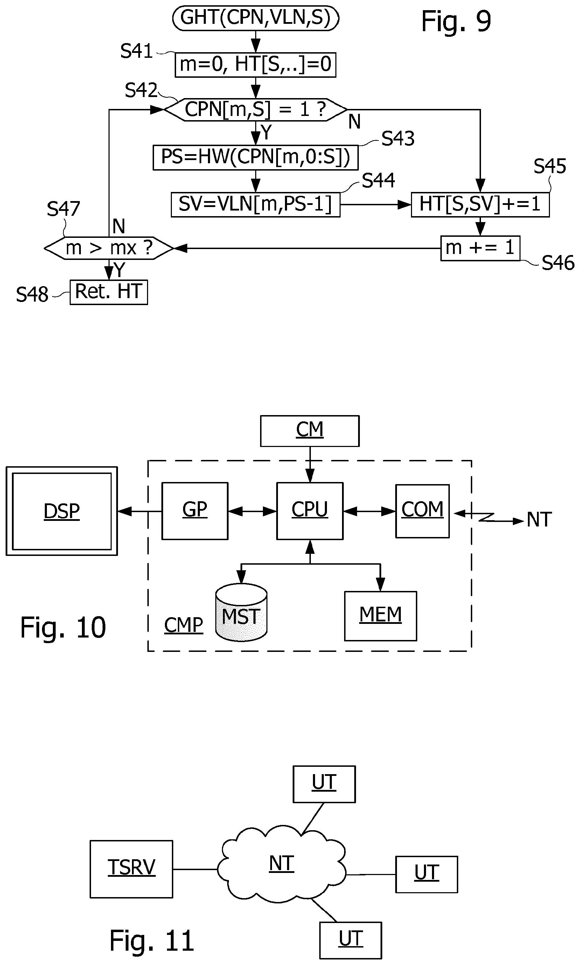

Figure 9 is a flowchart illustrating steps S41 to S48 of a procedure GHT that may be used for generating a histogram from a trace compressed according to the data compression scheme of Figure 6. The procedure GHT receives a table CPN containing the words CP for a set of data streams of a compressed trace CTR2, a table VLN containing the sample values VL associated with the words CP, and a number S of the data stream to process. In step S41, an index m is set to 0 and a part of a table HT selected by an index equal to the number S is initialized to 0. Then, in step S42, the value of the bit CPN[m,S] selected in the table CPN by indexes m and S is compared with 1. If the bit value CPN[m,S] is equal to 1, steps S43 to S47 are performed, otherwise only steps S45 to S47 are performed. In step S43, a variable PS receives the Hamming weight HW of the part of the word CPN[m] from the bit number 0 to the bit number S. Therefore, the variable PS receives the number of bits set to one in the least significant bits of the word CPN[m] up to the bit at the position S in this word. In step S44, a variable SV receives the sample value stored in the table VLN at indexes m and PS-1, i.e. the sample value stored in the table VLN[m] corresponding to the bit S set to 1 in the word CPN[m] or corresponding to the data stream S. In step S45, the value at indexes S and SV in the table HT is incremented by one (1). In step S46, the index m is incremented by one (1). In step S47, the index m is compared with its maximum value mx corresponding to the number of sample values minus one, in the data streams of the trace TRk. If the index m is greater that its maximum value mx, step S48 is performed, otherwise step S42 is performed again. In step S48, the procedure GHT returns the table HT containing the histogram of the compressed data stream stored in tables CPN, VLN at index S.

Figure 9 shows how a histogram can be easily computed from the compressed trace CTR2.

The histogram accumulation process to generate the table CH may be directly performed from the compressed traces, i.e. without generating the histograms HT, the sum performed in equation (1) being applied directly to the compressed traces or an extraction of the compressed traces using an extraction procedure such as the extraction procedure CTRE of Figure 4 adapted to the compression scheme of Figure 2.

One histogram accumulation table CH may be generated for each data stream or for groups of data streams, in all the traces.

An analysis of the second order or a higher order may be performed by considering two or more windows of sample values in each of the compressed traces CTR, CTR1, CTR2. Then, one two-dimensional histogram is formed from each window, and the two-dimensional histograms obtained from each trace are combined to form a single two-dimensional histogram or an n-dimensional histogram per trace, n being the order of the analysis or the number of considered windows per trace.

An analysis using several sample value windows in the traces may be advantageously also performed directly on the compressed traces as if the latter were uncompressed traces.

Other trace analyses may be applied directly on the compressed traces CTR, CTR1, CTR2, such as DPA ("Differential Power Analysis" - ref. [1]), CPA ("Correlation Power Analysis" - ref. [2]) and MIA ("Mutual Information Analysis" - ref. [3]). In other words, the data in the compressed traces are processed as data samples, i.e. the analysis is performed regardless the encoding format of the data in the compressed traces.

Figure 10 illustrates a computing environment CMP that can implement the server ASRV and/or the user terminal UT. With reference to Figure 10, the computing environment CMP comprises at least one processing unit CPU and memory MEM. The processing unit CPU executes computer-executable instructions and may be a hardware-implemented processor or a virtual processor. The memory MEM may be one or more volatile memories (e.g., registers, cache, RAM), non-volatile memories (e.g., ROM, EEPROM, flash memory, etc.), or any combination of the two. The memory MEM may store software instructions for implementing a test method when executed by one or more processors.

The computing environment CMP may include additional features. For example, the computing environment CMP may include storage MST, one or more input devices CM, one or more output devices DSP, and/or one or more communication connections COM. An interconnection mechanism, such as a bus, controller, or network (wired or wireless) interconnects the components of the computing environment CMP. Typically, operating system software or firmware (not shown) provides an operating environment for any other software executed in the computing environment CMP, and coordinates activities of the components of the computing environment CMP.

The storage MST may be removable or non-removable, and may include magnetic and/or optic disks, or any other medium which can be used to store information and which can be accessed within the computing environment CMP. The storage MST may store instructions related to the software.

The input device(s) CM may be a touch input device such as a keyboard, mouse, pen, trackball, touch screen, or game controller, a voice input device, a scanning device, a digital camera, remote control, or another device that provides input to the computing environment CMP. The output device(s) DSP may be a display, television, monitor, printer, speaker, or another device that provides output from the computing environment CMP.

The communication connection(s) COM enable communication over a communication medium to another computing entity. The communication medium conveys information such as the application file APF, audio or video information, or other data.

Figure 10 illustrates computing environment, display device DSP, and input device CM as separate devices for ease of identification only. The computing environment CMP, display device DSP, and input device CM may be separate devices (e.g., a personal computer connected by wires to a monitor and mouse), may be integrated in a single device (e.g., a mobile device with a touch-display, such as a smartphone or a tablet), or any combination of devices (e.g., a computing device operatively coupled to a touch-screen display device, a plurality of computing devices attached to a single display device and input device, etc.). The computing environment CMP may be a mobile device, for instance a smartphone, a personal computer, a set-top box, or one or more servers, for example a set of networked servers, a clustered server environment, or a cloud network of computing devices.

Figure 11 illustrates a generalized example of a computing environment. The computing environment is not intended to suggest any limitation as to scope of use or functionality of a described embodiment. With reference to Figure 11, the computing environment includes a processing server TSRV and user terminals UT that can access the server TSRV via a data transmission network such as Internet, or any telecommunication network or the like. The server TSRV is configured to implement the system 1 of Figure 1 to select files of an application received from a user terminal UT. The optional user interface WUI of the system 1 as shown in Figure 1 may be implemented in the user terminals UT.

The illustrations described herein are intended to provide a general understanding of the structure of various example embodiments. These illustrations are not intended to serve as a complete description of all of the elements and features of apparatus, processors and systems that utilizes the structures or methods described therein. Many other example embodiments or combinations thereof may be apparent to those of ordinary skills in the art upon reviewing the disclosure by combining the disclosed example embodiments. Other example embodiments may be utilized and derived from the disclosure, such that structural and logical substitutions and changes may be made without departing from the scope of the disclosure.

The methods disclosed herein may be totally of partially implemented by software programs.

Further, the methods disclosed herein are not limited to the use of the previously described compression schemes referring in particular to Figures 2, 5 and 6. Other known lossless compressions schemes can be applied to the acquired execution traces. The statistical analysis performed on compressed traces may either exploit the encoding format of the data in the compressed traces or process these data as data samples regardless of the encoding format.

In addition, the trace acquisition performed while the software program to be tested is executed, and the statistical analysis of the traces may be both performed by distinct computing devices, the compressed traces being transmitted from the acquisition computing device to the trace analyzing computing device, simultaneously or at the end of the trace acquisition.

Various implementations of the systems and techniques described here can be realized in digital electronic circuitry, integrated circuitry, specially designed ASICs (application specific integrated circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device. Various implementations of the systems and techniques described here can be realized as and/or generally be referred to herein as a controller, a circuit, a module, a block, or a system that can combine software and hardware aspects. For example, a module may include the functions/acts/computer program instructions executing on a processor (e.g., a processor formed on a semiconductor substrate, and the like) or some other programmable data processing apparatus.

These computer programs (also known as programs, software, software applications or code) include machine instructions for a programmable processor, and may be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

Some of the above example embodiments are described as processes or methods depicted as flowcharts. Although the flowcharts describe the operations as sequential processes, many of the operations may be performed in parallel, concurrently or simultaneously. In addition, the order of operations may be re-arranged. The processes may be terminated when their operations are completed, but may also have additional blocks not included in the figure. The processes may correspond to methods, functions, procedures, subroutines, subprograms, etc.

Methods discussed above, some of which being illustrated by flow charts, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. One or more generic or specific processors may perform the necessary tasks.

Specific structural and functional details disclosed herein are merely representative for purposes of describing example embodiments. Example embodiments, however, may be embodied in many alternate forms and should not be construed as limited to only the embodiments set forth herein.

Processors suitable for the processing of a computer program include, by way of example, both general and special-purpose microprocessors, and any one or more processors of any kind of digital computer. Generally, a processor will receive instructions and data from a read only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data (e.g., magnetic, magneto optical disks, or optical disks). Information carriers suitable for embodying computer program instructions and data include all forms of non-volatile memory, including by way of example semiconductor memory devices (e.g., EPROM, EEPROM, and flash memory devices; magnetic disks (e.g., internal hard disks or removable disks); magneto optical disks; and CD ROM and DVD-ROM disks. The processor and the memory may be supplemented by, or incorporated in special-purpose logic circuitry.

To provide for interaction with a user, implementations may be implemented on a computer having one or more display devices (e.g., a cathode ray tube (CRT), a light-emitting diode (LED), and/or liquid crystal display (LCD) display device) for displaying information to the user and a keyboard and a pointing device, e.g., a mouse or a trackball, or the like, by which the user can provide input to the computer. Other kinds of devices can be used to provide for interaction with a user, as well; for example, feedback provided to the user can be any form of sensory feedback (e.g., visual feedback, auditory feedback, and/or tactile feedback); and input from the user can be received in any form, including acoustic, speech, and tactile input.

Implementations may be implemented in a computing system that includes a back end component (e.g., as a data server), or that includes a middleware component (e.g., an application server), or that includes a front end component (e.g., a client computer having a graphical user interface or a Web browser through which a user can interact with an implementation), or any combination of such back end, middleware, or front end components. Components may be interconnected by any form or medium of digital data communication (e.g., a communication network). Examples of communication networks include a local area network (LAN) and a wide area network (WAN) (e.g., the Internet).

While certain features of the described implementations have been illustrated as described herein, many modifications, substitutions, changes, and equivalents will now occur to those skilled in the art. It is, therefore, to be understood that the appended claims are intended to cover all such modifications and changes as fall within the scope of the implementations. It should be understood that they have been presented by way of example only, not limitation, and various changes in form and details may be made. Any portion of the apparatus and/or methods described herein may be combined in any combination, except mutually exclusive combinations. The implementations described herein can include various combinations and/or sub-combinations of the functions, components, and/or features of the different implementations described.

References cited

[1] P. C. Kocher, J. Jaffe, and B. Jun, "Differential Power Analysis" In M. J. Wiener, editor, Advances in Cryptology - CRYPTO '99, volume 1666 of Lecture Notes in Computer Science, pp. 388-397. Springer, 1999

[2] E. Brier, C. Clavier, and F. Olivier, "Correlation Power Analysis with a Leakage Model" In M. Joye and J-J. Quisquater, editors, Cryptographic Hardware and Embedded Systems - CHES 2004, volume 3156 of Lecture Notes in Computer Science, pp. 16-29. Springer, 2004

[3] B. Gierlichs, L. Batina, P. Tuyls, and B. Preneel, "Mutual Information Analysis", CHES 2008, volume 5154 of LNCS, pp. 426-442, Springer, 2008

**Claims**

1. A method for analyzing security of a software program (AP), comprising:

   receiving, by a computing device (EMR), a compressed trace (CTR, CTR1, CTR2) obtained by executing the software program by a target processor at least once from a first input data set (ID), by acquiring an execution trace (TRk) during the execution of the software program, and by compressing the execution trace during or after the execution of the software program , the execution trace comprising data samples (SV) acquired from at least one register of the target processor at each of sampling times, the data samples obtained from the register and during one execution of the software program forming at least one data stream, the data streams acquired during one execution of the software program forming the execution trace (TRk);
   storing the compressed trace in a memory (TRDB); and
   performing, by the computing device, a statistical processing (SAT) directly applied to data in the compressed trace, to determine hidden data (g) manipulated by the software program.

2. The method of claim 1, further comprising receiving, by the computing device (EMR), a plurality of compressed traces (CTR, CTR1, CTR2) acquired from a plurality of executions of the software program from respective different input data sets (ID), the statistical processing (SAT) being applied to the compressed traces.

3. The method of one of claims 1 to 2, wherein the compressed trace (CTR, CTR1, CTR2) comprises several compressed data streams obtained from a first data stream of wide data samples divided into several words, each of the several data streams comprising one word extracted from each wide data sample of at least a part of the first data stream.

4. The method of one of claims 1 to 3, wherein the compressed trace (CTR, CTR1, CTR2) is obtained by compressing a sequence of consecutive identical data samples in a data stream of one execution trace (TRk) by a value (SV, SVi) of the identical data samples of the sequence followed by:

   a number of occurrences (ON, ONij) of the identical data samples in the sequence,
   and/or an index (ISij) of a first data sample of the sequence in the data stream or in the execution trace,
   or indexes (ISij, IEij) of the first data sample and of a last data sample, of the sequence in the data stream.

5. The method of one of claims 1 to 3, wherein the compressed trace (CTR, CTR1, CTR2) is obtained by identifying sequences of at least one consecutive data sample having a same sample value (SVi) in a data stream of one execution trace (TRk), and for each identified sequence, by associating in the compressed trace, the sample value of the data samples of the sequence with position data (ISij, IEij, ONij) defining positions and lengths of the distinct data samples in the execution trace or the data stream.

6. The method of one of claims 1 to 3, wherein the compressed trace (CTR, CTR1, CTR2) is obtained by compressing several data streams (DS0-DS3) of one execution trace (TRk), the compression of the several data streams being performed by generating for each of sampling cycles (Sn) a word (CP) specifying for each of the several data streams whether the data sample acquired at the sampling cycle is different or not from the data sample acquired at a previous consecutive sampling cycle, and a word (VL) comprising each of the sampled data acquired at the sampling cycle for each data stream, that is different from the data acquired at the previous consecutive cycle for the data stream.

7. The method of one of claims 1 to 6, wherein the statistical processing (SAT) comprises generating histograms (HT) storing numbers of occurrences of sample values (SV), the number of occurrences of each sample value recorded in one of the histograms being computed directly from the compressed traces (CTR, CTR1, CTR2), by adding numbers (ON, ONij, IEij-ISij+1) of occurrences of sequences of consecutive identical data samples read in the compressed traces and having a same sample value (SV), or by counting numbers of sequences of consecutive identical data in the compressed traces.

8. The method of one of claims 1 to 6, wherein the statistical processing (SAT) comprises generating an histogram accumulation table (CH) storing numbers of occurrences of sample values (SV), by reading numbers of occurrences of a sample value in a first compressed trace (CTR, CTR1, CTR2), and by accumulating the read numbers of occurrences in the histogram accumulation table in a position selected by a first index (1) corresponding to the sample value, a second index (g) corresponding to a possible value of a part of a secret data to be determined by the statistical processing, and a third index (VL) corresponding to a result of an operation performed by the software program (AP) and applied to the secret data part and to an input data (ID) applied to the software program to obtain an execution trace (TRk) corresponding to the first compressed trace.

9. The method of one of claims 1 to 6, wherein the statistical processing (SAT) comprises generating histograms (HT) storing numbers of occurrences of values by computing occurrence numbers of data read in the compressed traces (CTR, CTR1, CTR2), regardless an encoding format of the data stored in the compressed traces, or by considering the data stored in the compressed traces as acquired data samples.

10. The method of one of claims 1 to 6, wherein the statistical processing (SAT) is directly applied to the data stored in the compressed traces (CTR, CTR1, CTR2) regardless an encoding format of the data stored in the compressed traces, the statistical processing comprising at least one of:

   a Differential Power Analysis (DPA),
   a Correlation Power Analysis (CPA),
   a Mutual Information Analysis (MIA).

**11.** The method of one of claims 1 to 10, further comprising extracting at least one respective part in each of the compressed traces (CTR, CTR1, CTR2), the statistical processing (SAT) being directly applied to the extracted parts of the compressed traces.

**12.** A computer system comprising a processor configured to:

receive a compressed trace (CTR, CTR1, CTR2) obtained by executing a software program (AP) by a target processor at least once from a first input data set (ID), by acquiring an execution trace (TRk) during the execution of the software program, and by compressing the execution trace during or after the execution of the software program, the execution trace comprising data samples (SV) acquired from at least one register of the target processor at each of sampling times, the data samples obtained from the register and during one execution of the software program forming at least one data stream, the data streams acquired during one execution of the software program forming the execution trace (TRk);
store the compressed trace in a memory (TRDB);
apply to the compressed trace a statistical processing (SAT) in view of determining hidden data (g) manipulated by the software program; and
perform a statistical processing (SAT) directly applied to data in the compressed trace, to determine hidden data (g) manipulated by the software program.

**13.** The computer system of claim 12, further configured to:

execute, by the target processor or a simulation thereof, the software program at least once from a first input data set (ID);
during the execution of the software program, acquire the execution trace (TRk) from the at least one register of the target processor; and
during or after the execution of the software program, compress the execution trace to obtain the compressed trace (CTR, CTR1, CTR2).

**14.** The computer system of claim 12 or 13, further configured to implement the method of one of claims 1 to 11.

**15.** A computer program product loadable into a computer memory and comprising code portions which, when carried out by one or more computers, configure the one or more computers to carry out the method of one of claims 1 to 11.

Fig. 1

Fig. 2

Fig. 3

S1 — i=1, SN=1, CTR[..]=0

S2 — SV=TR[0]

S3 — TR[i] = SV ?

S9 — SN += 1 ← Y

N ↓

S4 — Apd. SV→CTR / Apd. SN→CTR

S8 — SV=TR[i]

S10 — SN = SNx? → Y

N ↓

S11 — i += 1

S5 — SN = 1

S12 — N — i > ix ?

S6 — i += 1

Y ↓

S13 — Apd. SV→CTR / Apd. SN→CTR

S7 — i > ix ? — N

Y ↓

S14 — Ret. CTR

---

CTRE(CTR,N1,N2)

S21 — i=0, j=0, ETR[..]=0

S22 — SN=CTR[1]

S23 — SN > N1?

S26 — ETR[j]=CTR[i] / ETR[j+1]=SN-N1

N ↓

S24 — i += 2

S27 — j += 2 / i += 2

S25 — SN+=CTR[i+1]

S28 — SN+=CTR[i+1]

S30 — ETR[j]=CTR[i] / ETR[j+1]=CTR[i+1]

S29 — SN > N2? — N

Y ↓

S31 — ETR[j]=CTR[i] / ETR[j+1]=N2-SN+CTR[i+1]+1

S32 — Ret. ETR

Fig. 4

Fig. 5

Fig. 6

Fig. 7

Fig. 8

Fig. 9

GHT(CPN,VLN,S)

S41 — m=0, HT[S,..]=0

S42 — CPN[m,S] = 1 ? → N

Y

PS=HW(CPN[m,0:S]) — S43

SV=VLN[m,PS-1] — S44 → HT[S,SV]+=1 — S45

S47 — N

m > mx ? ← m += 1 — S46

Y

S48 — Ret. HT

---

CM

DSP ← GP ↔ CPU ↔ COM ← ↯ → NT

CMP | MST | MEM

Fig. 10

---

Fig. 11

TSRV — NT (cloud) — UT

UT

UT

**EP 3 502 903 A1**

Europäisches
Patentamt
European
Patent Office
Office européen
des brevets

# EUROPEAN SEARCH REPORT

Application Number

EP 17 20 9112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 3 220 304 A1 (ESHARD [FR]) 20 September 2017 (2017-09-20) * paragraph [0034] * * paragraph [0042] - paragraph [0044] * * paragraph [0046] - paragraph [0048] * * paragraph [0052] * * figures 3,5,6 * | 1-15 | INV. G06F11/36 H03M7/30 ADD. G06F11/34 H04L9/00 |
| Y | Azzeddine Amiar ET AL: "Compressing Microcontroller Execution Traces to Assist System Analysis" In: "IFIP Advances in Information and Communication Technology", 1 January 2013 (2013-01-01), XP055479720, ISSN: 1868-4238 vol. 403, pages 139-150, DOI: 10.1007/978-3-642-38853-8_13, * Abstract * * section 1, 2, 6 * | 1-15 | |
| Y | JOHNSON E E ET AL: "PDATS. LOSSLESS ADDRESS TRACE COMPRESSION FOR REDUCING FILE SIZE AND ACCESS TIME", PROCEEDINGS OF THE ANNUAL INTERNATIONAL PHOENIX CONFERENCE ON COMPUTERS AND COMMUNICATIONS. PHOENIX, APR. 12 - 15, 1994; [PROCEEDINGS OF THE ANNUAL INTERNATIONAL PHOENIX CONFERENCE ON COMPUTERS AND COMMUNICATIONS], NEW YORK, IEEE, US, vol. CONF. 13, 12 April 1994 (1994-04-12), pages 213-219, XP000462559, * whole document * | 4-6 | TECHNICAL FIELDS SEARCHED (IPC) G06F H03M H04L |

-/--

The present search report has been drawn up for all claims

| Place of search | Date of completion of the search | Examiner |
|---|---|---|
| Munich | 31 May 2018 | Sarakatsanis, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 17 20 9112

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHIVAM BHASIN ET AL: "Side-Channel Leakage and Trace Compression using Normalized Inter-Class Variance", INTERNATIONAL ASSOCIATION FOR CRYPTOLOGIC RESEARCH,, vol. 20150701:174108, 1 July 2015 (2015-07-01), pages 1-26, XP061018540, [retrieved on 2015-07-01] * whole document * ----- | 1-11 | |

TECHNICAL FIELDS
SEARCHED      (IPC)

The present search report has been drawn up for all claims

| Place of search | Date of completion of the search | Examiner |
|---|---|---|
| Munich | 31 May 2018 | Sarakatsanis, G |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

# EP 3 502 903 A1

## ANNEX TO THE EUROPEAN SEARCH REPORT
## ON EUROPEAN PATENT APPLICATION NO.

EP 17 20 9112

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2018

| Patent document cited in search report | | Publication date | Patent family member(s) | | Publication date |
|---|---|---|---|---|---|
| EP 3220304 | A1 | 20-09-2017 | CN | 107102919 A | 29-08-2017 |
| | | | CN | 107103229 A | 29-08-2017 |
| | | | CN | 107103246 A | 29-08-2017 |
| | | | CN | 107104783 A | 29-08-2017 |
| | | | CN | 107104784 A | 29-08-2017 |
| | | | CN | 107104785 A | 29-08-2017 |
| | | | EP | 3208788 A1 | 23-08-2017 |
| | | | EP | 3208789 A1 | 23-08-2017 |
| | | | EP | 3217307 A1 | 13-09-2017 |
| | | | EP | 3220304 A1 | 20-09-2017 |
| | | | EP | 3220305 A1 | 20-09-2017 |
| | | | EP | 3220306 A1 | 20-09-2017 |
| | | | KR | 20170098729 A | 30-08-2017 |
| | | | KR | 20170098730 A | 30-08-2017 |
| | | | KR | 20170098731 A | 30-08-2017 |
| | | | KR | 20170098732 A | 30-08-2017 |
| | | | KR | 20170098733 A | 30-08-2017 |
| | | | KR | 20170098734 A | 30-08-2017 |
| | | | US | 2017244547 A1 | 24-08-2017 |
| | | | US | 2017244548 A1 | 24-08-2017 |
| | | | US | 2017244549 A1 | 24-08-2017 |
| | | | US | 2017244550 A1 | 24-08-2017 |
| | | | US | 2017244551 A1 | 24-08-2017 |
| | | | US | 2017244552 A1 | 24-08-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3220304 A
- US 20170244547 A

### Non-patent literature cited in the description

- Differential Power Analysis. **P. C. KOCHER ; J. JAFFE ; B. JUN.** Advances in Cryptology - CRYPTO '99, volume 1666 of Lecture Notes in Computer Science. Springer, 1999, vol. 1666, 388-397
- Correlation Power Analysis with a Leakage Model. **E. BRIER ; C. CLAVIER ; F. OLIVIER.** Cryptographic Hardware and Embedded Systems - CHES 2004, volume 3156 of Lecture Notes in Computer Science. Springer, 2004, vol. 3156, 16-29
- Mutual Information Analysis. **B. GIERLICHS ; L. BATINA ; P. TUYLS ; B. PRENEEL.** CHES 2008, volume 5154 of LNCS. Springer, 2008, vol. 5154, 426-442